# FASCICULE DE BREVET EUROPEEN

(11) **EP 0 782 501 B1**
(45) Date de publication et mention de la délivrance du brevet: **14.07.1999**
(21) Numéro de dépôt: 95932047.4
(22) Date de dépôt: 22.09.1995
(51) Int. Cl.: B29C 70/76, B29C 45/14, B29C 45/16, B60R 13/02

(54) **PROCEDE DE FABRICATION D'UN PANNEAU DE MATIERE REVETU D'UNE ZONE D'ASPECT NOTAMMENT TEXTILE**
VERFAHREN ZUM HERSTELLEN EINER PLATTE BESCHICHTET MIT EINER VERBLENDUNGSFLÄCHE, INSBESONDERE TEXTIL
METHOD FOR FABRICATING A MATERIAL PANEL LINED WITH AN ASPECT ZONE, PARTICULARLY TEXTILE

(30) Priorité: 22.09.1994 FR 9411546
(43) Date de publication de la demande: 09.07.1997
(73) Titulaire: PLASTIC OMNIUM AUTO INTERIEUR, 69007 Lyon (FR)
(72) Inventeur: D'HOOREN, Jean-Jacques, F-59147 Gondecourt (FR); DURIEZ, Dominique, F-59147 Gondecourt (FR)
(74) Mandataire: Duthoit, Michel
(86) Numéro de dépôt international: FR9501225
(87) Numéro de publication internationale: WO9609160

(56) Documents cités:
- EP-A- 0 196 988
- EP-A- 0 348 357
- EP-A- 0 482 270
- GB-A- 2 271 956
- PATENT ABSTRACTS OF JAPAN vol. 013 no. 153 (M-813) ,13 Avril 1989 & JP,A,63 312249 (KASAI KOGYO CO LTD) 20 Décembre 1988,

## Description

La présente invention concerne un procédé dé fabrication d'un panneau de matière revêtu d'une zone d'aspect et/ou de confort, notamment textile, et un panneau ainsi obtenu.

Bien que plus particulièrement développée dans le cadre de l'habillage intérieur des carrosseries de véhicules telles que, par exemple, des portières, la présente invention trouvera également son application dans tous les secteurs de l'activité économique dans lesquels on est amené à produire et/ou utiliser des panneaux de matière présentant un revêtement dont la fonction est, notamment esthétique.

Actuellement, pour fabriquer de tels panneaux, on connaît de nombreux procédés selon lesquels on forme une pièce support pleine sur laquelle on vient assujettir, par collage, un revêtement présentant une zone d'aspect et/ou de confort.

Bien que satisfaisants dans certains cas, ces procédés présentent l'inconvénient de fournir des panneaux dont les zones d'aspect et/ou de confort sont fragiles, notamment à leur périphérie. En effet, à cet endroit, le risque de décollage accidentel est élevé.

Pour remédier à ce problème, une première solution consiste à effectuer un collage renforcé du revêtement à sa périphérie. Néanmoins, ceci nécessite un temps de cycle allongé et des dispositifs complexes qui augmentent les coûts de revient du panneau. De plus, les risques de défauts inhérents au collage demeurent.

On connaît également des documents EP-A-0.482.270, EP-A-0.348.357 ou JP-A-63 312.249, des procédés de fabrication de panneaux présentant une ou plusieurs pièces d'aspect esthétique recouvrant un insert monobloc. Ledit insert est muni au niveau de la périphérie desdites pièces d'une gorge, dans laquelle ces dernières sont introduites.

Toutefois, selon ces documents, l'insert constitue une sous-couche, prévue sous lesdites pièces d'aspect esthétique. Les procédés correspondant entraînent donc, notamment une surconsommation de matière.

Par ailleurs, on connaît du document GB-A-2.271.956 un procédé de fabrication de panneaux de matière selon le préambule de la revendication 1, destinés notamment à l'habillage intérieur des carosseries de véhicules, présentant, au moins partiellement, sur au moins une de leurs faces, un revêtement comprenant au moins une zone d'aspect et/ou de confort, notamment textile, prévue sur un premier élément planiforme.

Selon ce procédé, on prévoit, par moulage, une première matière thermoplastique qui constitue, dans le prolongement dudit premier élément planiforme, un second élément planiforme.

Toutefois, dans ce document, la liaison dudit revêtement avec le reste du panneau n'est pas satisfaisante et ne permet pas un maintien correct de la zone d'aspect esthétique.

Le but de la présente invention est de proposer un procédé de fabrication d'un panneau de matière présentant un revêtement comprenant une zone d'aspect et/ou de confort et un panneau ainsi obtenu qui paient les inconvénients précités en permettant la fixation du revêtement de manière irréprochable même à sa périphérie.

Un des buts de la présente invention est de proposer un procédé de fabrication d'un panneau de matière présentant un revêtement comprenant une zone d'aspect et/ou de confort dont le temps de cycle est diminué et permettant une fabrication à cadence élevée.

Un des buts de la présente invention est de proposer un procédé de fabrication d'un panneau de matière présentant un revêtement comprenant une zone d'aspect et/ou de confort mettant en oeuvre un nombre réduit d'opérations de collage, voire même permettant de les supprimer.

Un des buts de la présente invention est de proposer un procédé de fabrication d'un panneau de matière présentant un revêtement comprenant une zone d'aspect et/ou de confort dont la fixation sur le panneau est réalisée grâce à la matière du panneau elle-même.

Un avantage de la présente invention est de permettre une finition indépendante de la zone d'aspect.

D'autres buts et avantages de la présente invention apparaîtront au cours de la description qui va suivre qui n'est donnée qu'à titre indicatif et qui n'a pas pour but de la limiter.

Selon la présente invention, le procédé de fabrication d'un panneau de matière, destiné notamment à l'habillage intérieur des carrosseries de véhicules, telles que, par exemple, des portières, présentant, au moins partiellement, sur au moins une de ses faces, un revêtement comprenant au moins une zone d'aspect et/ou de confort, notamment textile, prévue sur un premier élément planiforme, procédé dans lequel on prévoit, par moulage, une première matière thermoplastique qui constitue, dans le prolongement dudit premier élément planiforme, un second élément planiforme, est caractérisé par le fait qu'on définit au moins partiellement, en regard dudit premier élément planiforme, une interface de contact, et on assure, lors dudit moulage, la liaison entre ledit premier élément planiforme et ledit second élément planiforme, au moins partiellement, en prévoyant le long de ladite interface de contact une jupe sur ledit premier élément planiforme et, en vis-à-vis de ladite jupe, sur ledit second élément planiforme, des flancs pour former une gorge, ledit revêtement étant étiré dans ladite gorge et pincé localement au niveau de ladite gorge pour renforcer la tenue dudit revêtement sur le premier élément planiforme.

La présente invention concerne également un panneau, obtenu par la mise en oeuvre du procédé présenté ci-dessus, destiné notamment à l'habillage intérieur des carrosseries de véhicules, telles que, par exemple, des portières, présentant, au moins partiellement, sur au moins une de ses faces, un revêtement comprenant au moins une zone d'aspect et/ou de confort, notamment textile, ledit panneau étant constitué d'un premier élément planiforme, présentant ledit revêtement, et d'un second élément planiforme définissant, au moins partiellement, en regard dudit premier élément planiforme, une interface de contact, caractérisé par le fait qu'il comprend, le long de ladite interface de contact, une jupe sur le premier élément planiforme et, en vis-à-vis de ladite jupe, sur le second élément planiforme, des flancs pour former une gorge.

L'invention sera mieux comprise si l'on se réfère à la description suivante ainsi qu'aux dessins en annexe qui en font partie intégrante.
La figure 1 est une vue de dessus du panneau de matière présentant un revêtement comprenant une zone d'aspect et/ou de confort conforme à l'invention.
La figure 2 est une vue de coupe, suivant la ligne II-II représentée à la figure 1, qui détaille le panneau de matière conforme à l'invention.
La figure 3 illustre un exemple de mise en oeuvre du procédé de fabrication d'un panneau de matière conforme à l'invention.

La présente invention concerne un procédé de fabrication d'un panneau de matière présentant un revêtement comprenant une zone d'aspect et/ou de confort et un panneau ainsi obtenu.

Bien que notamment destinée à l'habillage intérieur des carrosseries de véhicule telles que par exemple, des portières, la présente invention trouvera également son application dans tous les domaines de l'activité économique dans lesquels on est amené à utiliser des panneaux de matière présentant, sur au moins une de leurs faces, une zone d'aspect et/ou de confort c'est-à-dire une zone dont la fonction est, notamment, d'améliorer le caractère esthétique du panneau.

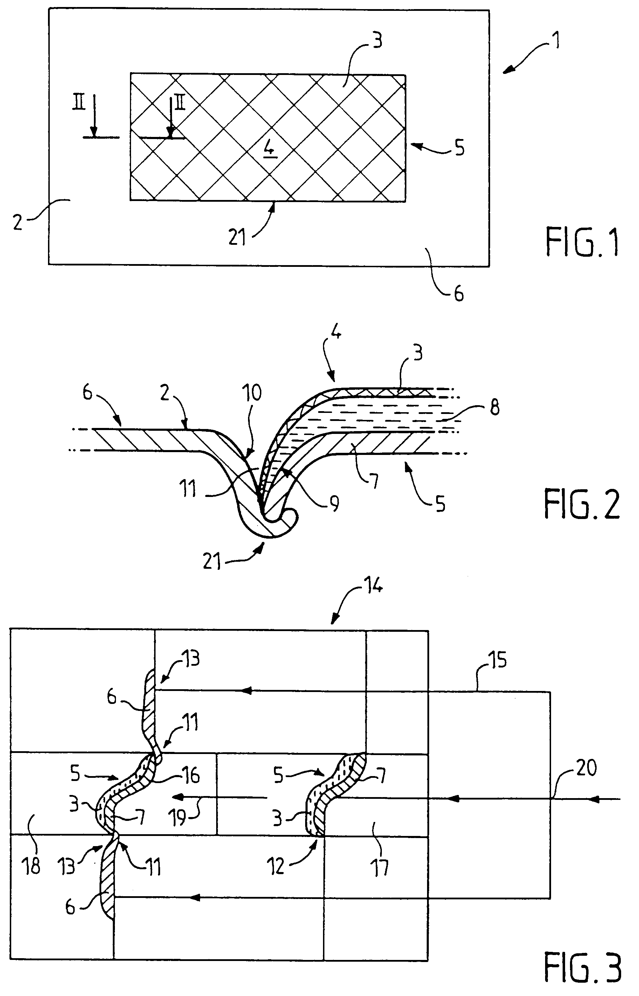

La figure 1 représente un exemple de panneau 1 de matière obtenu par un procédé de fabrication conforme à l'invention. Il présente, au moins partiellement, sur au moins une de ses faces 2, un revêtement 3 comprenant au moins une zone d'aspect et/ou de confort 4, notamment textile. Il pourra s'agir, également, de matière synthétique, de papier, de peinture ou autre.

D'après la figure 2, on remarque que, selon le procédé de fabrication conforme à l'invention, on prévoit une pièce 5, constituant un premier élément planiforme 5, présentant le revêtement 3. On prévoit également, par moulage, une première matière thermoplastique, qui constitue, dans le prolongement du premier élément planiforme 5, un second élément planiforme 6 définissant, au moins partiellement, en regard dudit premier élément planiforme 5 une interface de contact 21.

Par interface de contact, on entend zone dans laquelle va s'effectuer la liaison entre le premier et le second élément planiforme 5, 6. Par planiforme, il faut comprendre un élément présentant une épaisseur de faible dimension par rapport à sa surface totale, cette surface pouvant être éventuellement gauche.

Toujours selon le procédé conforme à l'invention, on assure, lors du moulage, la liaison entre le premier et le second éléments planiformes 5, 6, au moins partiellement, le long de l'interface de contact 21. Selon le mode préférentiel de réalisation de l'invention représenté à la figure 1, on constitue avec le premier élément planiforme 5, par exemple, un encart c'est-à-dire notamment, une pièce rapportée fabriquée préalablement.

Toujours selon le même mode de réalisation, on constitue, avec le second élément planiforme 6, par exemple, un cadre entourant, au moins partiellement l'encart 5 et on assure la liaison entre l'encart 5 et le cadre 6, au moins partiellement, à la périphérie de l'encart 5. Suivant l'exemple particulier représenté, le cadre 6 entoure entièrement l'encart 5. Le procédé de fabrication conforme à l'invention permet également d'obtenir des panneaux de matière dans lesquels le cadre 6 entoure, partiellement la périphérie de l'encart 5.

Comme première matière thermoplastique, on pourra choisir, par exemple, du polypropylène ou autre.

Selon un mode particulier de mise en oeuvre du procédé de fabrication conforme à l'invention, la liaison entre le premier et le second éléments planiformes 5, 6 est assurée par un surmoulage, notamment localisé le long de l'interface de contact 21. Il pourra s'agir soit d'une liaison sur chant, soit d'une liaison réalisée plus à l'arrière du premier élément filiforme 5 ou autre.

Plus précisément, on forme, par exemple préalablement, le premier élément planiforme 5, notamment par moulage ou par injection d'une couche support 7. Pour cela, on utilise une seconde matière thermoplastique qui pourra être, par exemple, du polypropylène ou autre.

Selon un mode particulier de mise en oeuvre du procédé conforme à l'invention, les première et seconde matières thermoplastiques pourront être de même famille. Par ailleurs, elles présentent des caractéristiques de compatibilité physico-chimique grâce auxquelles elles facilitent leur adhésion l'une à l'autre, notamment par surmoulage.

Suivant un autre mode de réalisation de l'invention, on constitue la couche support 7, notamment, a partir de fibres textiles et/ou de fibres cellulosiques.

Suivant le mode particulier de formation du premier élément planiforme 5 décrit plus haut, on solidarise le revêtement 3 sur la couche support 7. Cette opération est réalisée, par exemple, par collage.

Elle peut également être assurée par accrochage mécanique. Pour cela, on utilisera, notamment un revêtement 3 textile multicouche dont la couche en regard du premier élément planiforme 5 est constituée, par exemple, d'un non tissé. On met alors en contact le revêtement 3 et la matière thermoplastique de la couche support 7 lorsque cette dernière est encore à l'état fluide.

Suivant l'exemple particulier représenté, les dimensions du revêtement 3 et de la couche support 7 correspondent sensiblement, ce qui facilite un lissage et une fixation uniforme du matériau comprenant la zone d'aspect 4 sur son support c'est-à-dire la couche 7 de seconde matière thermoplastique.

Selon la figure 2, on remarque que le premier élément planiforme 5 constitue, par exemple, une pièce multicouche contenant, notamment, la couche support 7 et une couche 8 dont l'épaisseur et la nature du matériau permettent un contact moelleux. Pour cette dernière, on pourra utiliser, par exemple, une mousse de polyuréthane.

Le premier élément planiforme 5, peut également comprendre, par exemple, des couches éventuelles aptes a faciliter l'adhésion de la couche 8 permettant un contact moelleux et de la couche support 7. Il pourra s'agir, par exemple, de couches de matériaux thermoplastiques et/ou à base de cellulose.

Ainsi, l'épaisseur de l'ensemble constituée par le revêtement 3, notamment textile, et les couches du premier élément planiforme 5, autres que la couche support 7, présentent des caractéristiques d'élasticité.

Toujours suivant la figure 2, on prévoit, par exemple, le long de l'interface de contact 21, une jupe 9 sur le premier élément planiforme 5 et, en vis-à-vis de cette jupe 9, sur le second élément planiforme 6, des flancs 10 pour former une gorge 11.

Selon un mode particulier de mise en oeuvre du procédé conforme à l'invention, on étire le revêtement 3 dans la gorge 11 pour renforcer la tenue dudit revêtement 3 sur le premier élément planiforme 5.

De plus, on pince localement le revêtement 3 au niveau de la gorge 11. Ceci permet d'éviter les risques d'arrachage et/ou de décollage accidentel et permet à la zone d'aspect et/ou de confort 4 du revêtement 3 de conférer au panneau 1 un aspect esthétique quasiment irréprochable.

En effet, le revêtement 3 est parfaitement étiré. En outre, sa périphérie en regard de l'interface de contact 21 est protégée par la gorge 11.

Suivant un exemple particulier de réalisation, lors du moulage du second élément planiforme 6, on prévoit de rapporter, sur la couche support 7, des renforts tels que, par exemple des nervures.

Suivant un mode particulier de mise en oeuvre du procédé conforme à l'invention représenté à la figure 3, on forme le premier élément planiforme 5, présentant le revêtement 3, dans un premier moule ou empreinte 12. On forme le second élément planiforme 6 dans un second moule ou empreinte 13 et on assure la liaison entre le premier et le second éléments planiformes 5, 6 dans ledit second moule ou empreinte 13.

Suivant ce mode particulier de mise en oeuvre, on place, par exemple, le premier moule 12 et le second moule 13 dans un même outillage 14. Dans cet outillage 14, on injecte simultanément la première et la seconde matières thermoplastiques dans leur moule respectif 13, 12. Pour cela, on prévoit, par exemple, un réseau d'injection 15 de matière, notamment à partir d'un point commun 20.

Après injection, on transfère directement le premier élément planiforme 5 recouvert du revêtement 3 du premier moule 12 dans une empreinte 16, prévue dans le second moule 13. Pour cela, l'empreinte 16 est, par exemple, prévue à la taille du premier élément planiforme 5. De plus, l'outillage 14 peut être constitué, par exemple, d'un moule bi-étage.

Grâce à un tel dispositif et à l'injection simultanée de matière, on rapproche ainsi les opérations effectuées dans chacun des deux moules 12, 13 et on évite le fluage de matière du premier élément planiforme 5 après moulage par injection.

Dans le cas d'un moule bi-étage présentant un premier étage 17 dans lequel se trouve le premier moule 12 et un second étage 18 dans lequel se trouve le second moule 13, on moule simultanément et indépendamment le premier et le second éléments planiformes 5, 6. Ceci permet une finition indépendante de la solidarisation du revêtement 3 sur le premier élément planiforme 5. Après chaque opération de moulage, le premier étage 17 prend la place du second étage 18 suivant la flèche repérée 19.

La présente invention concerne également un panneau 1 obtenu par la mise en oeuvre du procédé tel que décrit ci-dessus. Ce panneau 1 est constitué d'un premier élément planiforme 5 présentant le revêtement 3 et d'un second élément planiforme 6 définissant, au moins partiellement, en regard dudit premier élément planiforme 5. Une interface de contact 21. Selon l'invention, il comprend, le long de l'interface de contact 21, une jupe 9 sur le premier élément planiforme 5 et, en vis-à-vis de cette jupe 9, sur le second élément planiforme 6, des flancs 10 pour former une gorge 11.

Selon un mode particulier de réalisation, le panneau 1 comprend le premier élément planiforme 5, constituant un encart, et le second élément planiforme 6, constituant un cadre entourant, au moins partiellement, l'encart 5.

## Revendications

1. Procédé de fabrication d'un panneau (1) de matière, destiné notamment à l'habillage intérieur des carrosseries de véhicules, telles que, par exemple, des portières, présentant, au moins partiellement, sur au moins une de ses faces (2), un revêtement (3) comprenant au moins une zone d'aspect et/ou de confort (4), notamment textile, prévue sur un premier élément planiforme (5), procédé dans lequel on prévoit, par moulage, une première matière thermoplastique qui constitue, dans le prolongement dudit premier élément planiforme (5), un second élément planiforme (6), caractérisé par le fait que l'on définit, au moins partiellement, en regard dudit premier élément planiforme (5), une interface de contact (21) et on assure, lors dudit moulage, la liaison entre ledit premier élément planiforme (5) et ledit second élément planiforme (6), au moins partiellement, en prévoyant le long de ladite interface de contact (21) une jupe (9) sur ledit premier élément planiforme (5) et, en vis-à-vis de ladite jupe (9), sur ledit second élément planiforme (6), des flancs (10) pour former une gorge (11), ledit revêtement (3) étant étiré dans ladite gorge (11) et pincé localement au niveau de ladite gorge (11) pour renforcer la tenue dudit revêtement (3) sur le premier élément planiforme (5).

2. Procédé selon la revendication 1, caractérisé par le fait que :
- on constitue avec ledit premier élément planiforme (5) un encart,
- on constitue avec le second élément planiforme (6) un cadre entourant, au moins partiellement ledit encart (5),
- on assure la liaison entre ledit encart (5) et ledit cadre (6), au moins partiellement à la périphérie dudit encart (5).

3. Procédé selon la revendication 1, caractérisé par le fait que l'on forme le premier élément planiforme (5) par moulage par injection d'une couche support (7) à partir d'une seconde matière thermoplastique et on solidarise le revêtement (3) sur ladite couche support (7).

4. Procédé selon la revendication 1, caractérisé par le fait que :
- on forme le premier élément planiforme (5), recouvert du revêtement (3), dans un premier moule (12),
- on forme le second élément planiforme (6) dans un second moule (13),
- on assure la liaison entre le premier élément planiforme (5) et le second élément planiforme (6) dans ledit second moule (13).

5. Procédé selon la revendication 4, caractérisé par le fait que l'on place le premier moule (12) et le second moule (13) dans un même outillage (14).

6. Procédé selon la revendication 5, caractérisé par le fait que l'on injecte simultanément la première et la seconde matières thermoplastiques dans leur moule respectif (13, 12) et on transfère directement le premier élément planiforme (5) recouvert du revêtement (3) du premier moule (12) dans une empreinte (16) prévue dans le second moule (13).

## Claims

1. Process for manufacturing a panel (1) of material, designed, in particular, for the interior trim of vehicle bodies, such as, for example, doors, having, at least partially, on at least one of its faces (2), a cladding (3) including at least one aesthetic appearance and/or comfort-conferring area (4), made in particular, of a textile material, provided on a first planiform element (5), a process wherein a first thermoplastic material which constitutes, in the continuation of the said first planiform element (5), a second planiform element (6) is provided by moulding, characterised by the fact that a contact interface (21) is defined, at least partially, facing the said first planiform element and, during the said moulding, the bond between the said first planiform element (5) and the said second planiform element (6) is ensured, at least partially, by providing along the said contact interface (21) a skirt (9) on the said first planiform element (5) and, facing the said skirt (9), on the said second planiform element (6), sides (10) to form a groove (11), the said cladding (3) being stretched into the said groove (11) and pinched locally in the area of the said groove (11) to adherence the stiffness of the said cladding (3) on the first planiform element (5).

2. Process according to claim 1, characterised by the fact that :
- an insert is formed with the said first planiform element (5) ;
- a frame surrounding, at least partially, the said insert (5) is formed with the second planiform element (6) ;
- the bond between the said insert (5) and the said frame (6) is ensured, at least partially, on the periphery of the said insert (5).

3. Process according to claim 1, characterised by the fact that the first planiform element (5) is formed by injection moulding a support layer (7) from a second thermoplastic material and the cladding (3) is rendered integral with the said support layer (7).

4. Process according to claim 1, characterised by the fact that :
- the first planiform element (5), covered with the cladding (3), is formed in a first mould (12) ;
- the second planiform element (6) is formed in a second mould (13) ;
- the bond between the first planiform element (5) and the second planiform element (6) is ensured in the said second mould (13).

5. Process according to claim 4, characterised by the fact that the first mould (12) and the second mould (13) are placed in the same tool (14).

6. Process according to claim 5, characterised by the fact that the first and the second thermoplastic materials are injected simultaneously into their respective moulds (13, 14) and the first planiform element (5) covered with the cladding (3) is transferred directly from the first mould (12) into an impression (16) provided in the second mould (13).

## Patentansprüche

1. Verfahren zur Herstellung einer Materialplatte (1), nämlich für die Innenverkleidung von Fahrzeugkarosserien, wie zum Beispiel Türen, die mindestens teilweise, auf mindestens einer ihrer Seiten (2), eine Beschichtung (3) aufweist, die mindestens eine Oberflächen- und/oder Behaglichkeitszone (4), nämlich aus Stoff, umfaßt, die auf einem ersten ebenen Element (5) vorgesehen ist, Verfahren, bei dem, durch Formguß, ein erstes thermoplastisches Material vorgesehen ist, das, in der Verlängerung des besagten ersten ebenen Elements (5), ein zweites ebenes Element (6) bildet, dadurch gekennzeichnet, daß mindestens teilweise, gegenüber dem besagten ersten ebenen Element (5), eine Kontaktschnittfläche (21) definiert wird und daß bei besagtem Formguß, die Verbindung zwischen besagtem ersten ebenen Element (5) und besagtem zweiten ebenen Element (6) sichergestellt wird, mindestens teilweise, indem entlang besagter Kontaktschnittstelle (21) ein Mantel (9) auf dem besagten ersten ebenen Element (5) und, gegenüber besagtem Mantel (9), auf besagtem zweiten ebenen Element (6), Flanken (10) zum Schaffen einer Rille (11) vorgesehen werden, wobei besagte Beschichtung (3) in besagte Rille (11) gezogen und örtlich, im Bereich besagter Rille (11) abgeklemmt wird, um den Halt besagter Beschichtung (3) auf dem ersten ebenen Element (5) zu verstärken.

2. Verfahren nach Anspruch 1, dadurch gekennzeichnet, daß :
- mit dem besagten ersten ebenen Element (5) eine Einlage gebildet wird,
- mit dem zweiten ebenen Element (6) einen Rahmen gebildet wird, der zumindest teilweise die besagte Einlage (5) umgibt,
- die Verbindung zwischen der besagten Einlage (5) und dem besagten Rahmen (6), zumindest teilweise, am Rand der besagten Einlage (5) gesichert wird.

3. Verfahren nach Anspruch 1, dadurch gekennzeichnet, daß das erste ebene Element (5) durch Spritzgießen einer Trägerschicht (7) ab einem zweiten thermoplastisches Material gebildet und die Beschichtung (3) auf der besagten Trägerschicht (7) fest verbunden wird.

4. Verfahren nach Anspruch 1, dadurch gekennzeichnet, daß :
- das mit der Beschichtung (3) bedeckte erste ebene Element (5) in einer ersten Form (12) gebildet wird,
- das zweite ebene Element (6) in einer zweiten Form (13) gebildet wird,
- die Verbindung zwischen dem ersten ebenen Element (5) und dem zweiten ebenen Element (6) in der besagten zweiten Form (13) gesichert wird.

5. Verfahren nach Anspruch 4, dadurch gekennzeichnet, daß die erste Form (12) und die zweite Form (13) in einselbes Werkzeug (14) gestellt werden.

6. Verfahren nach Anspruch 5, dadurch gekennzeichnet, daß das erste und das zweite thermoplastische Material gleichzeitig in die jeweiligen Formen (13, 12) eingespritzt werden und das erste ebene Element (5), mit der Beschichtung (3) überzogen, direkt von der ersten Form (12) in einen Abdruck (16), die in der zweiten Form (13) vorgesehen ist, übertragen wird.
